(19) Europäisches Patentamt
European Patent Office
Office européen des brevets

(11) EP 1 184 436 A1

(12) **EUROPEAN PATENT APPLICATION**

(43) Date of publication:
**06.03.2002 Bulletin 2002/10**

(51) Int Cl.[7]: **C09J 7/02**, B65D 5/00, B65D 5/02, B32B 27/32

(21) Application number: **00118960.4**

(22) Date of filing: **01.09.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **3M Innovative Properties Company**
**St. Paul, Minnesota 55133-3427 (US)**

(72) Inventor: **Kreckel, Karl Werner**
**42781 Haan (DE)**

(74) Representative: **Wilhelm, Stefan M. et al**
**Office of Intellectual Property Counsel, c/o 3M Deutschland GmbH, Carl-Schurz-Strasse 1**
**41453 Neuss (DE)**

(54) **Use of a pressure-sensitive adhesive tape for increasing the stability of a stack of goods**

(57) The present invention refers to the use of a pressure-sensitive adhesive tape comprising a backing bearing a pressure-sensitive adhesive layer, said backing comprising two or more layers, the exposed layer of the backing being a polymer layer wherein the polymer has a Vicat softening point of less than 65 °C, for increasing the stability of a stack of goods comprising two or more superimposed layers of goods.

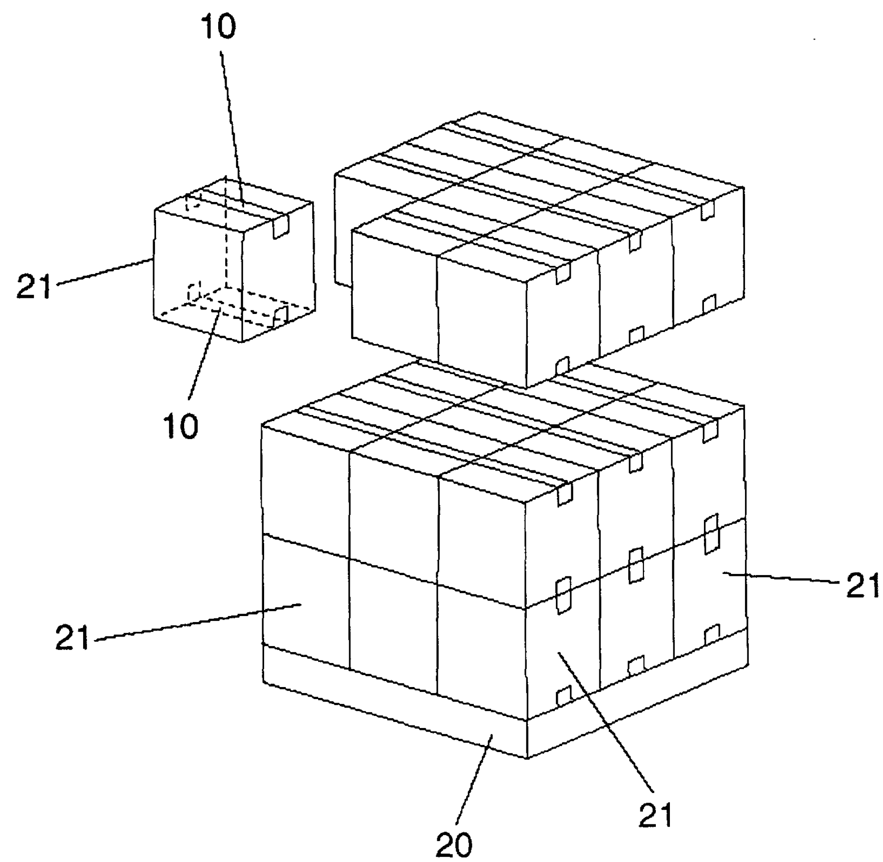


Fig. 2

EP 1 184 436 A1

## Description

### Field of the invention

The present invention refers to the use of a pressure-sensitive adhesive tape comprising a backing bearing a pressure-sensitive adhesive layer, said backing having two or more layers whereby the exposed layer of the backing is a polymer layer wherein the polymer has a Vicat softening point of less than 65 °C, in the packaging industry. The present invention furthermore refers to a novel pressure-sensitive adhesive tape suitable for the use according to the present invention and to a stack of goods obtained by applying the use and method according to the present invention in the packaging industry.

### Background of the invention

It is common in industry that goods are palletized, stacked or assembled otherwise for storage, internal transportation at the production site and external transportation and shipment. Goods such as, for example, cartons which are arranged in stacks or arrangements of goods, are frequently sealed with packaging tapes usually comprising a backing bearing on one side a pressure-sensitive adhesive layer and on the other side a release layer or coating which allows the tape to be wound up in roll form without requiring a separate release liner. The exposed release-coated surface of the backing tends to be slippery against itself and against other surfaces such as, for example, cardboard or corrugated paper which adversely affects packaging, bundling, palletizing or arranging otherwise of goods because a pile of boxes, for example, sealed with such packaging tape, tends to be unstable and may even tumble down during transportation.

Various methods have been disclosed in prior art to sufficiently stabilize such stacks of goods throughout the whole shipment and transport.

US 5,351,461 discloses a method and installation for packaging a palletizable load of constituent elements or goods comprising inserting a non-slip sheet between each pair of subsequent layers of said load and non-peripheral strapping of the load by means of a microcreped stretchable paper tape which is preferably additionally secured to the load by depositing spots of glue.

US 5,339,957 refers to the stabilization of a stack of cartons which have highly slippery, glossy and point of sales graphics surfaces. Stabilization is obtained by inserting high-friction tie sheets between adjacent layers of the stack wherein the tie sheet preferably has a chipboard substrate which is coated on both sides with an ultra-high friction tackified coating. In the embodiment of Fig. 1 of US '957, the stack of goods is additionally secured by a covering of a plastic stretch wrap film.

EP 0,863,087 discloses printing and/or spraying silicone-based anti-slip layers on the outermost surface of a wall of a package so that the anti-slip layer is in contact to an adjacent package when the package is stacked with other packages in an assembly. EP '087 furthermore discloses an anti-slip sheet to be interposed in an assembly of stacked packages, said anti-slip sheet comprising on at least one side a silicone-based anti-slip layer.

Methods of stabilizing stacks of goods disclosed in the state of the art also include applying of hot-melt adhesives to the surfaces of goods which are in contact with adjacent goods in order to adhere such goods to each other.

The prior art methods of palletizing, assembling or stacking goods do not always result in stacks of goods which are sufficiently stable for internal and external transportation or shipment processes and/or exhibit further disadvantages. Interlayer sheets of cardboard or corrugated paper typically are several mm thick and therefore require considerably space for storage and result in large volumes of waste. Adhering of boxes with hot-melt adhesives or other adhesives tend to partly tear cardboxes, for example, upon de-palletizing and/or leaves residual amounts of the adhesives on the cardboxes which adversely affects subsequent handling of such boxes. Auxiliary stack-stabilizing means such as, for example, adhesives or polymeric wrappings cannot be removed and re-applied when the stack or pallet has to be rearranged. Silicone coatings on cartons, packages or interlayer sheets, respectively, tend to be rubbed off and may contaminate other products which may interfere with the application of paint or other coatings or components to such products.

It was therefore an object of the present invention to provide stabilized stacks of goods and methods for preparing such stacks which do not exhibit the shortcomings of state-of-the-art stacks of goods or exhibit such disadvantages to a lower degree only, respectively. Other objects of the present invention are apparent to the person skilled in the art from the following detailed description of the invention.

### Summary of the invention

The present invention refers to the use of a pressure-sensitive adhesive tape comprising a backing bearing a pressure-sensitive adhesive layer, said backing comprising two or more layers, the exposed layer of the backing being a polymer layer wherein the polymer has a Vicat softening point of less than 65 °C, for increasing the stability of a stack of goods comprising two or more superimposed layers of goods.

The present invention also refers to a novel pressure-sensitive adhesive tape comprising a backing bearing a pressure-sensitive adhesive layer, said backing comprising two or more layers, the exposed layer of the backing being a polymer layer wherein the polymer has a Vicat softening point of less than 65 °C and comprising one or more polymers which are selected from a group consisting of very low density polyethylenes (VLDPEs), and the exposed layer of the backing or the backing, respectively, being stretched.

The present invention furthermore refers to a method of preparing said novel pressure-sensitive adhesive tape according to the present invention.

The present invention furthermore refers to a stack of goods comprising two or more superimposed layers of goods, a pressure-sensitive adhesive tape being attached to at least one piece of goods in a layer of the stack, said pressure-sensitive adhesive tape comprising a backing bearing a pressure-sensitive adhesive layer, said backing comprising two or more layers and the exposed layer of the backing being a polymer layer wherein the polymer has a Vicat softening point of less than 65 °C.

## Brief description of the figures

*Fig. 1* is a schematic representation of a cross-section of the pressure-sensitive adhesive tape 10 suitable for use according to the present invention which comprises a backing 3 and a pressure-sensitive adhesive layer 4, said backing comprising an exposed layer 1 and a support layer 2.

*Fig.* 2 is a schematic perspective view of a stack of cartons according to the present invention comprising a pallet 20 bearing cartons 21 arranged on top of each other in columns, said cartons 21 being sealed at their respective top and bottom surface with a pressure-sensitive adhesive tape 10 suitable for use in the present invention.

*Fig. 3* shows for a stack of cartons which are palletized in columns and sealed on their respective top and bottom surface along the length of the carton with a 50 mm wide pressure-sensitive adhesive tape as is shown in Fig. 2, the ratio S of the total surface of the backing of the pressure-sensitive adhesive tape applied to the top or bottom surface of the carton, over the total surface of the top or bottom surface of such cartons, as a function of the width of the cartons.

*Fig.4* is a schematic perspective view of a stack of cartons according to Fig.2 wherein an interlayer sheet 30 has been inserted between the top and next-to-top layer of cartons.

## Detailed description of the invention

Pressure-sensitive adhesive tapes which are useful in the present invention comprise a backing 3 and a pressure-sensitive adhesive layer 4, as is shown in the schematic cross-sectional view of Fig. 1. The backing comprises an exposed layer 1 and a support layer 2.

The exposed layer 1 of the backing is a polymer layer wherein the polymer has a Vicat softening point of less than 65 °C, more preferably of not more than 60 °C and especially preferably of not more than 55 °C. The Vicat softening point is evaluated according to ISO 306:1994(E) using a force by which the steel rod with its indenting tip is pressed onto the polymer sample, of 10 N and a temperature increase rate of 120 °C/h. The Vicat softening point of the polymer of the exposed layer preferably is at least 30 °C and more preferably at least 35 °C because the polymer is difficult to handle for lower Vicat softening points and tends to stick, for example, to lamination rolls and the stretching apparatus, in case the exposed layer of the backing or the backing are stretched, respectively, during processing. The Vicat softening point of the polymer of the exposed layer prefereably is between 35 °C and 60 °C and, more preferably, between 40 °C and 55 °C.

The term "exposed layer" or "exposed polymer layer" of the backing is to be understood broadly and covers continuous polymer layers covering part or all of the backing as well as discontinuous polymer layers wherein the polymer is applied in stripes or dots. Continuous exposed polymer layers covering all or essentially all of the backing, are preferred.

The polymers of exposed layer 1 having a Vicat softening point of less than 65 °C can comprise one or more polymer components which are preferably selected from a group of polymers consisting of very low density polyethylenes and copolymers comprising an olefin as a first comonomer and an alkyl(meth)acrylate or vinyl acetate as a second comonomer.

The terms "ultra low density polyethylene (ULDPE)", "very low density polyethylene (VLDPE)" and "linear very low density polyethylene (LVLDPE)" have been used interchangeably in the polyethylene art to designate the polymer subset of linear low density polyethylenes having a density less than or equal to 0.915 g/cm$^3$. Above and below, the term "very low density polyethylene" will be used for polyethylenes in this density area. The term "linear low density polyethylene (LLDPE) will be used for low density polyethylenes having a density of above 0.915 g/cm$^3$.

In the present invention, VLDPE having a density of 0.900 g/cm$^3$ or less, preferably of 0.895 g/cm$^3$ or less and more preferably of between 0.850 and 0.8925 g/cm$^3$ are preferred. The term VLDPE includes both homopolymers and copolymers of ethylene with one or more comonomers. Preferred comonomers for use in such copolymers include $\alpha$-olefins having from 3 to about 14 carbon atoms, preferably from 4 to 10 carbon atoms and especially preferably from 4 to 8 carbon atoms. Representative examples of such comonomers include 1-butene, 1-pentene, 1-hexene, 4-methylpentene-1, 1-octene, 1-decene, and the like. Of these, 1-octene is particularly preferred. VLDPEs wherein one or more $\alpha$-olefins are present in an amount ranging from about 1 to about 20 percent by weight and, in particular, from about 1 to about 10 percent by weight, are preferred. VLDPEs which are suitable in the present invention may comprise other comonomers which, if present, are preferably used in an amount of about 1 to about 15 and more preferably from about 1 to about 10 percent by weight of VLDPE. The overall amount of comonomers preferably is less than about 30 percent, more preferably less than about 25 percent and especially preferably less than about 20 percent by weight of the VLDPE.

While the VLDPEs preferred for use in the present invention are those polymerized with metallocene catalysts, any VLDPE having a density of less than 0.900 g/cm$^3$ and a Vicat softening point of less than 65 °C may be used. As used herein, the term "metallocenes" refers to polymerization catalyst systems such as the system disclosed in US 5,191,052. Metallocenes are complex combinations of a metal atom compound with cyclopentadienyl groups. The metallocenes are a "sandwich complex" arrangement of two cyclopentadienyl groups and a group IV transition Metal (Ti, Zr, Hf, Cr). Such catalysts are also named "single site" or "constrained geometry" catalysts. VLDPEs which are obtained by using a metallocene catalyst system are often also referred to as plastomers.

VLDPEs useful in the present invention preferably have a weight average molecular weight in the range from 50,000 to 200,000, more preferably from 75,000 to 200,000, and most preferably from 75,000 to 150,000. The VLDPEs preferably have a melt-flow index of at least 0.1 g /10 min and more preferably of at least 0.5 g/10 min.

Manufacture of VLDPEs is well known in the art. Any of several processes may be utilized including both high and low pressure processes preferably employing metallocene catalysts as is disclosed, for example, in US 5,191,052. VLDPEs which are commercially available are specified in the example section below and include, for example, AFFINITY series polyolefin plastomers commercially available from Dow Plastics and ENGAGE series polyolefin plastomers commercially available from DuPont Dow Elastomers.

A second class of polymers preferred for use in the exposed layer 1 of the backing 3 includes copolymers comprising an olefin as a first comonomer and an alkyl(meth)acrylate or vinyl acetate as a second comonomer. Suitable olefins include ethylene, propylene, butylene, 2-methyl-pentene, hexene, octene, derivatives thereof, or combinations of an olefin or derivative thereof. Especially preferred are polymers wherein the olefin is ethylene. The alkyl group of the alkyl(meth)acrylate preferably has a carbon number from 3 to 25, more preferably from 4 to 20. Specific examples of preferred acrylates include methyl acrylate, ethyl acrylate, propyl acrylate, n-butyl acrylate, 2-ethylhexyl acrylate, decyl acrylate, octadecyl acrylate, methyl methacrylate, ethyl methacrylate, n-butyl methacrylate and the like. Of these, methyl acrylate, n-butyl acrylate and 2-ethylhexyl acrylate are particularly preferred.

Especially preferred are also copolymers comprising ethylene as a first comonomer and vinyl acetate as a second comonomer. The amount of the vinyl acetate comonomer with respect to the mass of the ENA copolymer preferably is 15-45 wt.% and more preferably 20-40 wt.%. For percentages of the amount of the vinyl acetate comonomer outside of the range of 15-45 wt.%, the Vicat softening temperature of the ENA copolymer tends to be unfavourable.

The ethylene/alkyl(meth)acrylate or vinyl acetate, respectively, copolymer (which is also referred to above and below as E/A(M)A or ENA copolymer, respectively) can comprise other comonomers such as, for example, other free radically polymerizable monomers such as, for example, acrylic acids (i. e. acrylic, methacrylic and ethacrylic acid), other acrylates or other vinyl esters. These additional monomers are preferably present in small amounts, usually less than a total of about 10 percent by weight based upon the weight of the resulting copolymer.

The E/A(M)A or ENA, respectively, copolymers which are useful in the present invention preferably have a melt-flow index of 0.5 -20 and more preferably of 2-10.

The E/A(M)A or ENA, copolymers, respectively, useful in the present invention are known in prior art and can be produced, for example, by the method disclosed in US 3,350,372. Generally ethylene, alkyl(meth)acrylate or vinylacetate, respectively, and, if desired, further monomer(s) are metered into, for example, a high pressure autoclave reactor along with any one of a number of well-known free radical polymerization initiators (catalysts) in an effective amount. Particularly preferred catalysts include organic peroxides such as, for example, lauroyl peroxide, di-tert butyl peroxide, tert butyl peroxide, tert butyl perpivilate and various azo compounds.

The polymer which is used in the exposed layer of the backing can comprise one or more VLDPEs and/or one or more E/A(M)A or ENA, copolymers, respectively, which are selected so that the Vicat softening point of the polymer of the exposed layer of the backing is less than 65 °C. Vicat softening points for VLDPEs or E/A(M)A or ENA copolymers, respectively, are reported for various polymers in literature. The Vicat softening points of the polymers used in the exposed layer of the backing of the pressure-sensitive adhesive tapes of the Examples are given in Table 1 below. The Vicat softening points of polymers which are not reported in literature can easily be measured applying the procedure according to ISO 306:1994(E) using a force of 10 N and a heating rate of 120 °C/h as was specified above. As a rule of thumb, the Vicat softening point of a polymer, comprising a mixture of two or more polymer components each having a Vicat softening point of less than 65 °C is usually less than 65 °C, as well.

The polymer used in the exposed layer of the backing of the pressure-sensitive adhesive tape which is useful in the present invention comprises in a first preferred embodiment preferably 1 to 5, more preferably 1 to 3 and especially preferably 1 to 2 VLDPEs. The VLDPE polymer(s) are preferably present in an amount of at least 50 percent by weight, more preferably of at least 75 percent by weight and especially preferably of at least 95 percent by weight with respect to the mass of the polymer of the exposed layer.

In a second preferred embodiment, the polymer used in the exposed layer of the backing of the pressure-sensitive adhesive tape preferably comprises 1 to 5, more preferably 1 to 4 and especially preferably 1 to 3 copolymers of E/A(M)A or ENA, respectively. These copolymers are preferably present in an amount of at least 60 percent by weight, and more preferably of at least 80 percent by weight with respect to the mass of the polymer of the exposed layer.

In a third preferred embodiment, the polymer used in the exposed layer of the backing of the pressure-sensitive adhesive tape comprises at least one VLDPE and at least one E/A(M)A or ENA copolymer, respectively. The ratio of the mass of the VLDPE(s) over the mass of the E/A(M)A-VA copolymer(s) preferably is between 0.2 and 10 and, more preferably, between 0.5 and 5. The sum of the masses of the VLDPE(s) and the E/A(M)A-VA copolymer(s) with respect to the mass of the polymer of the exposed layer preferably is at least 70 percent by weight and more preferably at least 75 percent by weight.

The polymer of the exposed layer of the backing may comprise further polymers such as, for example, homopolymers or copolymers including two or more comonomers, of an olefin, or derivatives of such olefin-comprising polymers. Examples for suitable additional olefin homopolymers include high density polyethylene (HDPE) which is commercially available, for example, from Dow Chemical Company, Midland, MI ("Dow") under the trade designation "4352N"; low density polyethylene (LDPE) which is commercially available, for example, from Dow under the trade designation "LDPE 722" (having a melt index of 8.0 g/10 min. and a density of 0.92 g/cm$^3$); polypropylene which is commercially available, for example, from Shell Chemical Company, Houston, TX ("Shell") under the trade designation "SRD-4-188" (having a melt flow rate of 5.0 g/10 min. and a butylene content of 5 percent); and polybutylene which is commercially available, for example, from Shell under the trade designation "PB DP-8220". Examples for suitable additional olefin copolymers include copolymers of ethylene and any of propylene, butylene, hexene, or octene; copolymers of propylene and any of ethylene, butylene, hexene, or octene; or terpolymers including an olefin such as a terpolymer of ethylene, butylene and hexene. A suitable terpolymer of ethylene, butylene, and hexene is commercially available from Exxon Chemical Company, Houston, TX, under the trade designation "Exact 3034" (having a melt index of 3.5 g/10 min. and a density of 0.902 g/cm$^3$).

The amount of additonal polymers which are different from VLDPEs and E/A(M)A-VA copolymers in the polymers of the exposed layer of the backing preferably is less than 7.5 percent by weight, more preferably less than 5 percent by weight and especially preferably less than 2 percent by weight with respect to the mass of the polymer of the exposed layer of the backing. The additional polymer, included into the polymer of the exposed layer of the backing, preferably exhibits a Vicat softening point of less than 70 °C, more preferably of less than 65 °C and especially preferably of less than 60 °C.

The polymer of the exposed layer of the backing may further comprise further additives such as, for example, film-building additives, processing aids, pigments, colorants, fluorescent agents, UV light absorbers, UV light inhibitors, antioxidants, tracers, anti-caking agents, and fillers. Exemplary ultraviolet light absorbers include those available from Ciba-Geigy Corporation, New York City, NY under the trade designation "Tinuvin 325" and "Tinuvin 900" and those available from Clariant Corporation, Charlotte, NC under the trade designation "Sandover VSU". Exemplary ultraviolet light inhibitors include those available from Ciba-Geigy under the trade designation "Tinuvin 292" and "Tinuvin 144". Exemplary antioxidants include those available from R. T.Vanderbilt Company, Inc., Norwalk, CT under the trade designation "Vanox 1320" and "Vanox ODP". Exemplary colorants (i. e., pigments and dyes) include titanium dioxide available from E. I. DuPont de Nemours & Company, Wilmington, DE ("DuPont") under the trade designation "Ti-Pure R-104". Exemplary fluorescent agents include those available from Ciba-Geigy under the trade designation "Uvitex OB". Exemplary anti-caking agents include silica available from Degussa Corporation, Teterboro, NJ under the trade designation "Siperant 22" and "Siperant D17". Exemplary fillers include calcium carbonate, for example, available from Georgia Marble Company, Atlanta, GA under the trade designation "Gamaco" and "Calwhite"; clay, for example, available from Huber Industrial Minerals, Macon, GA under the trade designation "Huber 40C" and "Huber 900"; and talc such as that available from Pfizer Minerals Pigments and Metals Division, New York City, NY under the trade designation "Pfizer CP 38-33".

The sum of the amounts of such further additives with respect to the mass of the exposed layer of the backing is low and preferably less than 10 percent by weight, more preferably not more than 7.5 percent by weight and especially preferably not more than 5 percent by weight. The amount of particle type further additives such as pigments or fillers has to be selected low enough so that such additives do not adversely affect the softness and conformability of the stretched backing.

The polymer of the exposed layer of the backing preferably comprises one or more polymer components having a Vicat softening temperature of less than 65 °C, more preferably of less than 60 °C and especially preferably of between 40-60 °C in order to provide a Vicat softening temperature of less than 65 °C for the polymer of the exposed layer of the backing. The Vicat softening point of the polymer of the exposed layer of the backing can optionally be decreased by incorporating into such polymer low-molecular weight organic additives such as, for example, oligomeric compounds, mineral oils, waxes and low molecular weight polyisobutylene. Since the exposed layer of the backing is in contact with the pressure-sensitive adhesive layer when the tape is wound up in roll form, such additives tend to migrate into the pressure-sensitive adhesive layer. Therefore, the amount of such additives preferably is low and, in particular, less than 7.5 percent by weight, more preferably less than 5 percent by weight and especially preferably less than 2 percent by weight.

The support layer 2 of the pressure-sensitive adhesive tape 10 may be selected from a wide variety of polymer materials which are preferably selected from the group of stretchable polymer materials in order to allow for stretching of the backing. Since the exposed layer 1 and the support layer 2 of the backing layer 3 are preferably co-extruded, the support layer preferably comprises a hot-melt processable polymer such as a thermoplastic polymer. Representative examples of polymers include polyamides (e. g., nylon); polyolefins (e. g., polyethylenes, polypropylenes, polybutylenes, poly-4-methylpentenes and others); polystyrenes; polyesters; copolyesters; polyvinyl chlorides; polyethylene vinyl acetates; copolymers (e. g., ethylene propylene copolymers, ethylene butylene copolymers, ethylene hexene copolymers, ethylene octene copolymers, propylene butylene copolymers, and thermoplastic rubber block copolymers); polymethyl methacrylates; and mixtures and copolymers thereof. Especially preferred materials for a support layer include polypropylenes, polypropylenes blended with other polyolefins, and copolymers of propylene and other alpha-olefins in amounts, for example, of up to about 50 percent by weight based on total weight of the substrate. Preferred materials for a support layer include semi-crystalline polypropylene having a melting point greater than about 150 °C, semi-crystalline polyethylene having a melting point greater than about 100 °C, and semi-crystalline or amorphous polyester. Many of the aforementioned polymeric materials are commercially available and may be used without modification. Alternatively, they may be modified in ways well known to one of ordinary skill in the art. For example, the compositions for preparing substrates can be modified with minor amounts of conventional modifiers, for example, colorants (i. e. pigments, dyes), fluorescing agents, antioxidants, and fillers, such as zinc oxide, titanium dioxide, calcium carbonate or hydrocarbon resins.

Stretching of the backing is preferred. In case only the exposed layer of the backing is stretched and subsequently laminated or transferred otherwise to the support layer, such support layer may also be selected from materials which are not stretchable such as, for example, paper layers, metal films and pre-oriented polymeric films.

The backing may comprise one or more further layers in addition to the exposed layer 1 and the support layer 2. Such additional layer or layers are applied to the surface of the support layer. The support layer may bear, for example, one or more further polymeric layers in order to modify, e.g., the mechanical properties of the pressure-sensitive adhesive tape. Any such additional layers are preferably selected from the stretchable or non-stretchable materials given above.

It is usually desirable that the surface of the support layer onto which the pressure-sensitive adhesive layer is applied, is corona-treated or flame-treated or that a chemical primer layer is applied to such surface in order to obtain a secure anchoring of the pressure-sensitive adhesive layer on the support layer. Such pre-treatment of the surface of the support layer is preferably applied immediately before application of the pressure-sensitive adhesive layer.

It is preferred in the present invention that the exposed layer of the backing of the pressure-sensitive adhesive tape is oriented or stretched. Stretching can be obtained by providing the exposed layer of the backing as a single film, stretching it with subsequent lamination of the stretched exposed layer to the support layer. It is, however, preferred that the exposed layer is applied first to the support layer of the backing with subsequent stretching of the resulting backing. The exposed layer is preferably co-extruded with the support layer to give the backing but it is also possible, for example, to coat a precursor of the exposed layer to the support layer with or without using one or more solvents with subsequent drying and/or polymerization. Co-extrusion of the exposed layer and the support layer is preferred because this results in a strong and reliable anchoring of the two layers to each other.

The term "stretched" as used above and below refers to stretching of the exposed layer at a temperature below its crystalline melting point, or of the backing at a temperature below the lower of the melting points of the support layer and the exposed layer, respectively. Stretching can be performed in one or two directions which is referred to as monoaxial or biaxial stretching. Biaxial stretching can be performed by stretching into the first and second stretch direction, respectively, subsequently or simultaneously.

The term "stretch ratio" as used herein to describe a method of stretching or a stretched film, respectively, indicates the ratio of a linear dimension of a given portion of a stretched film to the linear dimension of the same portion prior to stretching. Alternatively, the term "stretch parameter" may be used which is defined as the value of the stretch ratio minus 1.

The exposed layer of the backing or the backing, respectively, of the pressure-sensitive adhesive tape useful in the present invention are preferably monoaxially or biaxially and more preferably biaxially stretched. In an especially preferred embodiment of the present invention, the exposed layer of the backing or the backing, respectively, of the pressure-sensitive adhesive tape useful in the present invention, are simultaneously biaxially stretched.

Monoaxial stretching may be performed by propelling the film over rollers of increasing speed into the machine direction (MD) as is described, for example, in US 2,618,012, US 3,046,599, US 3,502,766 or US 3,890,421. Both monoaxial and biaxial stretching is preferably performed, however, by using a flat film tenter apparatus that grasps the sheet (employing such means as a plurality of clips) along the opposing edges of the sheet and propels the grasping means in one stretch direction to provide a monoaxially stretch sheet, first in a first stretch direction and subsequently in a second stretch direction to provide a sequentially biaxially stretched sheet and simultaneously in a first and a second stretch direction to provide a simultaneously biaxially stretched sheet of film, respectively. Typically but not always, the first and the second stretch direction are substantially perpendicular to each other and are in the machine directon ("MD") of the sheet of film and in the cross direction ("CD") of the sheet of film. Biaxial simultaneous stretching in MD and CD can be obtained, for example, by propelling the grasping in the MD along diverging rails. By increasing clip speed in the MD, stretch in the MD occurs while by using diverging rails, CD stretch occurs. Such methods and suitable flat film tenter apparati are described in US 4,675,582, US 4,825,111, US 4,853,602, US 5,036,262, US 5,051,225 and US 5,072,493.

The stretch parameters for monoaxial stretching preferably varies between 3:1 and 15:1 and more preferably between 4:1 and 12:1.

The stretch parameters for biaxial stretching in the first and second direction of stretching preferably are independently from each other between 3:1 and 15:1, more preferably between 4:1 and 12:1 and especially preferably between 5:1 and 10:1. The term "simultaneous biaxial stretching" as used above and below means that at least 10 % of the final stretch in each of the first and second direction of stretching being performed simultaneously, more preferably at least 25 %, and still more preferably at least 40 %. Although simultaneous biaxial stretching can be obtained by tubular blown film stretching processes, it is preferred to use flat film tenter stretching processes just described to minimize thickness variations and avoid processing difficulties typically associated with tubular blown film processes.

Further details on suitable stretching parameters can be taken from US S. N. 09/192,059 filed by the present applicant on November 13, 1998, which is incorporated herein by reference. With the benefits of the teachings in the present patent specification and the cross-referenced US S. N. 09/192,059, one of skill in the art may adjust any or all of the parameters and thereby obtain improvements which differ in magnitude, or may thereby be able to select an appropriate stretch profile and adjust the precise levels of stretching necessary to provide pressure-sensitive adhesive tapes comprising an exposed polymer layer which are useful in the present invention.

If only the exposed layer of the backing has been stretched, the support layer is subsequently applied to the inner, non-exposed surface of the exposed layer, e. g., by extrusion or lamination.

It was found by the present inventor that stretching of the exposed layer of the backing or the backing, respectively, tends to increase T-peel adhesion of the exposed layer of the backing against itself and/or to impart such T-peel adhesion to the exposed layer. This was found by the present inventor, in particular, for pressure-sensitive adhesive tapes wherein the polymer of the exposed layer of the backing comprises one or more VLDPEs. Stretching of the exposed layer of the backing or the backing, respectively, also tends to impart advantageous mechanical properties to the pressure-sensitive adhesive tape. It was found by the present inventor that the exposed layer of the backing or the backing, respectively, of the pressure-sensitive adhesive tape useful in the present invention is preferably stretched biaxially and more preferably simultaneously biaxially.

Pressure-sensitive adhesive tapes, the exposed layer of the backing of which exhibits a T-peel strength after a dwell time of 3 days at 23 °C of at least 0.10 N/1.27 cm and more preferably of at least 0.15 N/1.27 cm, are preferred. The T-peel strength of the exposed layer of the backing after a dwell time of 3 days at 50 °C preferably is at least 1.5 N/1.27 cm, more preferably at least 2.0 N/1.27 cm and especially preferably at least 2.5 N/1.27 cm.

The exposed layer of the backing is preferably printable wherein the surface coverage of the printing with respect to the surface of the backing preferably is less than 0.5, more preferably less than 0.35 and especially preferably less than 0.25 in order not to adversely affect the stack-stabilizing effect of the backing.

The pressure-sensitive adhesive tape suitable for use in the present invention further comprises a pressure-sensitive adhesive layer which is applied to the surface of the backing which is opposite to the exposed layer of the backing. Useful adhesives according to the present invention include all pressure-sensitive adhesives.

Acrylate-based pressure-sensitive adhesives are preferred because they exhibit favourable release properties from the surface of the stretched exposed layer of the backing so that the resulting pressure-sensitive adhesive tape can be rolled up without requiring an additional release liner.

Acrylate-based pressure-sensitive adhesives suitable in the present invention are described in some detail, for example, in Handbook of Pressure-Sensitive Adhesive Technology, ed. by D. Satas, New York 1989, pp. 396- 450.

The pressure-sensitive adhesive layer can be introduced into the multilayer film as a transfer film, by hotmelt extrusion or hotmelt coating, or it can be coated on adjacent layers as an organic or aqueous solution or dispersion with subsequent evaporation of the solvent and optional curing, or as a solvent-free, pre-polymerized syrup with subsequent curing. The pressure-sensitive adhesive layer (3) is preferably applied by hotmelt extrusion or hotmelt coating.

A particularly suitable acrylate based pressure-sensitive adhesive useful in the present invention, comprises homopolymers and more preferably copolymers comprising one or more alkyl acrylates the alkyl groups of which have an average of 4-14 C atoms. The term average of 4-14 C atoms means that the average number of C atoms of the alkyl acrylate compounds, weighed by their respective percentage by weight with respect to the mass of the alkyl acrylate component, is between 4-14 and, in particular, between 4-12 C atoms. Useful alkyl acrylates (i.e., acrylic acid alkyl ester monomers) include, e. g. linear or branched monofunctional unsaturated acrylates or methacrylates of non-tertiary alkyl alcohols, the alkyl groups of which have from 4 to 14 and, in particular, from 4 to 12 carbon atoms. Examples of these lower alkyl acrylates used in the invention include but are not limited to n-butyl acrylate, isobutyl acrylate, hexyl acrylate, 2-ethylhexyl acrylate, isooctyl acrylate, n-octyl acrylate, n-octyl methacrylate, 2-methylbutyl acrylate, isononyl acrylate, n-nonyl acrylate, isoamylacrylate, n-decyl acrylate, isodecyl acrylate, isodecyl methacrylate, isobornyl acrylate, 4-methyl-2-pentyl acrylate and dodecyl acrylate. Preferred lower acrylate and methacrylate esters include isooctyl acrylate, n-butyl acrylate, 2-ethylhexyl acrylate, isononyl acrylate and dodecyl acrylate.

The acrylate-based pressure-sensitive adhesive used in the adhesive layer 4, preferably is a homopolymer or copolymer containing up to 5 and, in particular, 1-4 alkyl acrylates. The average number of carbon atoms in the alkyl groups of the alkyl acrylates as defined above preferably is between 4-14, especially between 4-12 and very particularly between 5-10. The concentration of the alkyl acrylate component with respect to the mass of the precursor of the pressure-sensitive adhesive preferably is at least 75 percent by weight, and, in particular, at least 85 percent by weight.

The acrylate-based pressure-sensitive adhesive useful in the present invention may contain alkyl esters of unsaturated aliphatic carboxylic acids other than acrylic acid as comonomers such as, for example, alkyl maleates and alkyl fumarates (based, respectively, on maleic and fumaric acid). In this regard, dibutyl maleate, dioctyl maleate, dibutyl fumarate and dioctyl fumarate are preferred. The amount of ester compounds of unsaturated aliphatic carboxylic acids other than acrylic acid preferably is not too high and, in particular, does not exceed 25 percent by weight with respect to the mass of the alkyl acrylate component. The precursor of the pressure-sensitive adhesive useful in the present invention may further comprise polar comonomers. Examples for strongly polar monomers are acrylic acid, methacrylic acid and acrylamides while N-vinyl lactams such as, for example, N-vinyl pyrrolidone, N-vinyl caprolactam, acrylonitrile and dimethyl amino-propyl methacrylate are typical examples of moderately polar monomers.

If required, the acrylate-based pressure-sensitive adhesives useful in the present invention may comprise additives such as tackifiers, plasticizers, fillers, antioxidation agents, UV-stabilizers, crosslinkers or inorganic or organic fibers.

Pressure-sensitive adhesive tapes comprising a backing bearing a pressure-sensitive adhesive layer, said backing comprising two or more layers, the exposed layer of the backing being a polymer layer wherein the polymer has a Vicat softening point of less than 65 °C (which pressure-sensitive adhesive tapes are also referred to above and below as "pressure sensitive adhesive tapes useful or (suitable) for use in the present invention"), were found to increase the stability of a stack of goods. The shape of the goods which can be used in the stacks of goods according to the present invention can vary and includes any shape which allows said goods to be arranged in superimposed layers of the stack. Specific examples of goods include, for example, cartons, crates, half-open display cartons which are optionally sealed at one end, e. g., with a heat-shrunk polymer film, sacks, plastic wrapping used, for example, for diapers and toilet articles, or specially treated cartons such as cartons of consumer products having glossy, point of sales graphics surfaces or cartons with polycoated surfaces. It is also possible to use goods of different shape such as, for example, cartons or half-open display cartons or cartons and sacks, respectively, in one stack of goods according to the present invention.

The stacks of goods are frequently arranged on pallets but the present invention also includes stacks arranged on other carriers or, for example, on the floor or on the bed of a container or truck.

In a first embodiment of a stack of goods according to the present invention, such stack comprises two or more superimposed layers of goods whereby a pressure-sensitive adhesive tape useful in the present invention is attached to at least one piece of goods in a layer of the stack whereby at least part of the surface of the exposed polymer layer of said good preferably is in contact with at least part of the surface of a piece of good in an adjacent, superimposed or a subjacent layer of the stack of goods. The exposed layer of the pressure-sensitive adhesive tapes useful in the present invention, tend to exhibit sufficiently high values of the coefficient of friction (COF), for example, against cardboard, respectively, to provide a stabilization of the stack. It was found by the present inventor that exposed layers of the backing the polymer of which comprising at least one VLDPE, tend to exhibit a higher COF against cardboard upon stretching and, in particular, upon simultaneous biaxial stretching. Stacks according to the present invention wherein the exposed layer of the pressure-sensitive adhesive tape exhibits a COF against cardboard of at least 1.2, more preferably of at least 1.4 and especially preferably of at least 1.5, are preferred.

In a second embodiment of the stacks of goods according to the present invention which is preferred, such stack comprises two or more superimposed layers of goods whereby a pressure-sensitive adhesive tape useful in the present invention is attached to at least one piece of goods in the lower layer of a pair of adjacent, superimposed layers of the stack and to at least one piece of goods in the upper layer layer of said pair of layers of the stack of goods, so that at least part of the exposed layer of the backing of the pressure-sensitive adhesive tape of the piece of goods in the lower layer is in contact with at least part of the exposed layer of the backing of the pressure-sensitive adhesive tape of the piece of goods in the upper layer.

Fig. 2 shows a specific example of a stack according to the second embodiment of the present invention comprising a pallet 20 bearing a stack of cartons 21 which are arranged in superimposed layers thereby forming separate columns. Each carton 21 is sealed at its top and bottom surface with a packaging tape 10 suitable for use in the present invention so that the packaging tape at the bottom surface of a carton in an upper layer of the stack of cartons is in contact with the packaging tape at the top surface of the corresponding carton in the subjacent layer of the stack of goods.

The stability of the stack of goods according to the second embodiment of the present invention tends to increase with an increase of the average ratio S of the surface of the exposed layer of the backing of the pressure-sensitive adhesive tape applied to the top surface of at least a first piece of goods in a first, lower layer of a pair of adjacent, superimposed layers of the stack which is in contact with the exposed layer of the backing of the pressure-sensitive adhesive tape applied to the bottom surface of at least a second piece of goods in the second, upper layer of the pair of layer of the stack of goods, over the total surface or area of contact between such pieces of goods in the two adjacent first (lower) and second (upper) layers of the stack. Fig. 3 shows how this ratio S varies for a stack of cartons which are palletized in columns and sealed on their respective top and bottom surface along the length of the carton with a 50 mm wide pressure-sensitive adhesive tape as is shown in Fig. 2, as a function of the width of the cartons.

Generally, stacks of goods according to the second embodiment of the present invention wherein, irrespective of the specific shape of said goods, the ratio S of the contact area between the exposed layer of the backing of a pressure-sensitive adhesive tape applied to a first piece of goods in the lower layer of a pair of adjacent, superimposed layers of the stack, and the exposed layer of the backing of a pressure-sensitive adhesive tape applied to a second piece of goods in the upper layer of the pair of layers of the stack, over the overall contact area between the exposed surface of said first piece of goods and the exposed surface of said second piece of goods, is at least 0.05, more preferably at least 0.15, are preferred.

It was found by the present inventor that the stability of the stack of goods can be further improved by including an interlayer sheet having a first and second exposed major surface wherein at least part of the surface of at least one of such major surfaces is in contact with at least part of the surface of one piece of goods in a layer of the stack.

In one embodiment, the interlayer sheet 30 is inserted between the lower layer of a pair of adjacent, superimposed layers of the stack of goods and the upper layer of such pair of layers of the stack of goods as is schematically shown in Fig. 4. Such interlayer sheets can be used both in stacks of cartons according to the first and second embodiment of the present invention, respectively. Stacks of goods according to the present invention which include one or more interlayer sheets between one or more pairs of adjacent, superimposed layers of the stack, are referred to above and below as the third embodiment of stacks of goods according to the present invention.

It is also possible that the interlayer sheet is in contact with at least part of the surface of at least one piece of goods in a layer of the stack only provided that

- the major surface of the interlayer sheet which is in contact with said piece of goods exhibits a smooth surface with $R_z \leq 3$ µm, more preferably $R_z \leq 2$ µm at least in the contact area between the interlayer sheet and the piece of good, and
- said piece of good exhibits a pressure-sensitive adhesive tape useful in the present invention at least in part of said contact area.

The interaction between the interlayer sheet and the exposed polymer layer of the pressure-sensitive adhesive tape results in a stabilization of the stack. In a preferred embodiment, the interlayer sheet is applied to the top surface of the top layer of the stack of goods, which tends to stabilize the stack and aditionally protects it against rain and dirt.

Stacks according to the present invention wherein the interlayer sheet is in contact with one layer of the stack only are referred to above and below as the fourth embodiment of stacks of goods according to the present invention.

The term interlayer sheet means a sheet of a layer which can comprise various materials such as, for example, polymeric films, paper layers or metallic films. These materials are given, however, only by means of example and the layers useful in the present invention, include all materials and geometries having an extension in the X-and Y-direction which is large in comparison to the extension in the Z-direction.

The dimensions of the interlayer sheet are preferably selected so that the sheet is in contact with at least two pieces of goods in said lower layer of a pair of layers of the stack and with at least two pieces of goods in said upper layer of a pair of layers of the stack. The dimensions of the interlayer sheet are preferably selected so that it essentially matches with the dimensions of the interface between the upper and lower layer of a pair of adjacent, superimposed layers of the stack of goods. The shape of the sheet can vary widely and includes, for example, square, circular or rectangular shapes.

Examples of interlayer sheets suitable in the present invention include, for example, sheets of layers of cardboard, corrugated paper, copy paper or polymer-coated paper, polyester, polyolefin and, in particular, polyethylene or polypropylene, polyvinylchloride films and aluminum films. The cardboard or paper layer may optionally be siliconized on one or two surfaces if a potential contamination with silicons is not critical for the specific application. Polyolefin and, in particular, polypropylene film may be monoaxially or biaxially stretched whereby biaxially stretched and, in particular, simultaneously biaxially stretched polypropylene films are especially preferred because they offer advantageous mechanical properties also for films with a low thickness of, for example, 15-40 μm.

The thickness of the interlayer sheet can vary widely and is typically selected to compromise between ease of handleability and costs. The thickness of the interlayer preferably varies between 8 and 200 μm. Especially preferred are polymeric or metallic interlayers with a thickness of between 10 and 50 μm. Such films can be selected to offer advantageous mechanical properties and a favourable stiffness, and they are preferably applied non-manually and, in particular, by packaging robots in order to facilitate handling. It is apparent that the storage space required for the interlayer and the amount of waste produced by such interlayers can be dramatically reduced when using thin polymeric interlayer sheets, as is preferred in the present invention, in comparision to siliconized or adhesive coated interlayer sheets of cardboard with a thickness of typically several mm which are suggested in prior art methods of increasing the stability of stacks of goods. Polymeric interlayers useful in the present invention can be wound up in a roll for storage, which is another advantage over cardboard interlayer sheets. Wrinkling of thin polymer interlayer sheet is not a problem because wrinkling can be largely avoided by using nonmanual application techniques; even if wrinkling were to occur, the arrangement of the goods in the stack and the stability of the stack would not be adversely affected because of the low thickness of the polymeric interlayer sheets.

At least one of the major surfaces of the interlayer sheet or sheets used in the stacks according to the third embodiment of the present invention, preferably is smooth and exhibits an average roughness in Z-direction of $R_z \leq 4$ μm, more preferably of $R_z \leq 3$ μm and especially preferably of $R_z \leq 2$ μm. Interlayer sheets with an Rz value of between 0.5 and 2 are particularly preferred. It was found by the present inventor that a 90° peel adhesion is frequently observed between interlayers having a sufficiently smooth surface and, in particular, the surface of stretched exposed layers the polymer of which comprises at least one VLDPE, or the surface of stretched or unstretched exposed layers the polymer of which comprises at least one E/A(M)A-VA copolymer, respectively. Although the present inventors do not wish to be bound by such theory, it is assumed that this 90° peel adhesion results in a lateral interaction between two superimposed, adjacent layers of the stack of goods, forming a bond between such layers thereby stabilizing the stack of goods and suppressing the movement of goods in each of these two layers or of these two layers against each other upon quick acceleration or deceleration procedures during transportation, for example. The exposed layer of the backing of the pressure-sensitive adhesive tape and the roughness of the interlayer are preferably selected so that a 90° peel adhesion between these surfaces of at least 0.05 N/2.54 cm, more preferably of at least 0.15 N/2.54 cm and especially preferably of at least 0.4 N/2.54 cm is obtained.

The interlayer sheet is preferably applied to the surface of the lower layer of goods of a pair of two adjacent layers of goods by exerting some pressure, for example, by means of rolling the interlayer sheet over with a roller before stacking the upper layer of goods of said pair of layers onto the lower one during palletizing. It was found by the present inventor that upon removal of the upper layer of goods, the interlayer sheet usually stays with the lower layer of the sheet which facilitates, for example, de-palletizing.

Stacks according to the present invention facilitate internal transportation processes at a production site, internal storage of goods and external transportation to customers. Due to their increased stability, stacks according to the present invention generally do not need to be additionally secured at least for internal transportation processes by, for example, applying stretch/cling films which is a considerable advantage over prior art.

Whether or not the stacks of goods according to the present invention need to be additionally secured for internal storage or external transportation processes, depends on various factors such as, for example:

(i) Whether or not the exposed layer or the backing of the pressure-sensitive adhesive tape is stretched;
(ii) The optional presence of one or more interlayer sheets and their respective surface roughness;
(iii) The shape and weight of the goods;
(iv) The mode of arranging the goods in the stack.

With respect to (i), it was observed that the stability of stacks of goods according to the present invention can often be increased when employing pressure-sensitive adhesive tapes useful in the present invention the exposed layer of the backing or the backing, respectively, of which being stretched. This is especially pronounced for pressure-sensitive adhesive tapes wherein the polymer of the exposed layer of the backing comprises one or more VLDPEs. In an especially preferred embodiment, the stack of goods according to the present invention comprises simultaneously biaxially stretched pressure-sensitive adhesive tapes wherein the polymer of the exposed layer of the backing comprises one or more VLDPEs.

The stability of the stacks of goods according to the present invention can furthermore often be increased when including into such stacks one or more interlayers between one or more pairs of subsequent layers (item (ii) above) . Especially preferred are embodiments of the stack of goods according to the present invention comprising at least one interlayer sheet with a surface roughness of $R_z \leq 2$ µm and a pressure-sensitive adhesive tape wherein

a) the polymer of the exposed layer of the backing comprises at least one VLDPE and wherein the exposed layer or the backing, respectively, are stretched, or

b) the polymer of the exposed layer of the backing comprises at least one E/A(M)A-VA copolymer.

The shape and weight of the goods arranged in the stack of goods according to the present invention also influences the stability of the stack as is noted above in (iii). Heavy-weight goods generally tend to form more stable stacks in comparison to lightweight goods unless such goods are rapidly accelerated or decelerated. Goods such as, for example, cartons wherein essentially all of the top surface of a carton in a lower layer is in contact with all of the bottom surface of a carton in the superimposed adjacent layer of the stack, tend to form more stable stacks than goods such as, for example, sacks where only part of such surfaces are in contact with each other.

Another factor which can influence the stability of the stacks of goods is the mode of stacking (item (iv) above). In stacks of cartons, for example, the cartons can be arranged in columns as is shown in Fig. 2, or they can be arranged in a composite mode. In case of a column mode, the cartons within a column are usually sufficiently secured to each other whereas the different columns are only loosely connected to each other so that auxiliary stack-stabilizing means are usually required and can only be omitted if one or more suitable interlayer sheets are inserted, which results in a lateral stabilization of the stack between adjacent columns.

The factor (i) to (iv) described to some detail above are exemplary only, and the stability of the stacks of goods according to the present invention can be influenced by other factors than those described above.

The stability of a stack of goods is thus influenced by various factors and it has to be carefully examined in each particular case whether using of auxiliary stack-stabilizing means such as metallic or polymeric strapping bands or stretch/cling films which are wound around the stack, hot-melt adhesives or spray adhesives which are applied to the surface of the pieces of goods being in contact with other pieces of goods and further stabilizing means can be omitted. The use of the pressure-sensitive adhesive tape comprising a backing bearing a pressure-sensitive adhesive layer, said backing comprising two or more layers, the exposed layer of the backing being a polymer layer wherein the polymer has a Vicat softening point of less than 65 °C, results, however, in stacks of goods with a favourable and/or a superior stability as compared to stacks of goods known in the state of the art. The auxiliary stack-stabilizing means required in the stacks of goods according to the present invention can typically distinctly be reduced in comparison to the amount required in conventional methods of stabilizing stacks. Stacks according to the present invention wherein the use of auxiliary stack-stabilizing means can be omitted, are especially preferred.

Pressure-sensitive adhesive tapes which are useful in the present invention are partly known in the prior art. US 4,339,485 discloses pressure-sensitive adhesive tapes having an unstretched exposed release layer comprising a polyolefine elastomer having amongst other specified properties a density of between 0.80 and 0.90 g/cm$^3$. The release layer of such pressure-sensitive adhesive tape typically includes high density polyolefin components, however. US S. N. 09/238,515 filed by the present applicant on January 27, 1999, discloses release articles including pressure-sensitive adhesive tapes wherein the exposed release layer comprises a polymer comprising an olefin and an alkyl (meth)acrylate.

It was not recognized in the prior art, however, that pressure-sensitive adhesive tapes comprising a backing bearing a pressure-sensitive adhesive layer, said backing comprising two or more layers, the exposed layer of the backing being a polymer layer wherein the polymer has a Vicat softening point of less than 65 °C, can be used for increasing the stability of a stack of goods comprising two or more superimposed layers of goods.

Pressure-sensitive adhesive tapes comprising a backing bearing a pressure-sensitive adhesive layer, said backing comprising two or more layers, the exposed layer of the backing being a polymer layer wherein the polymer has a Vicat softening point of less than 65 °C and comprises one or more polymers which are selected from a group consisting of linear low density polyethylenes (VLDPEs), and the exposed layer of the backing or the backing, respectively, being stretched, are novel and preferred for the use of increasing the stability of a stack of goods according to the present invention, and they are therefore also subject matter of the present invention. Preferred embodiments of such pressure-sensitive adhesive tapes include those described above which are suitable and, in particular, preferred for the use according to the present invention.

The present invention will be further described with regard to the following examples. These examples are offered to further illustrate the various specific and preferred embodiments and techniques. It should be understood, however, that many variations and modifications may be made while remaining within the scope of the present invention.
Prior to this, some test methods are described which will be used in the examples.

Test methods

*Vicat softening point*

Vicat softening points are measured according to EN ISO 306:1994(E) using a force of 10 N by which the steel rod with its indenting tip is pressed into the polymer sample, and a temperature increase rate of 120 °C/h.

*Coefficient of friction (COF)*

Coefficient of friction was measured according to Deutsche Industrie Norm (DIN) 53 375-B.
Backings including a support layer and an exposed layer to be tested were adhered to the surface of a 7.5 cm x 23.5 cm aluminum test plate using a double-coated adhesive tape # 444 from 3M Company, St. Paul, Minnesota/USA. The backing had the dimensions of 7.5 cm x 14.5 cm and was adhered to the aluminum test plate over its entire area with double-coated adhesive tape.
The frictional forces between the exposed layer and a substrate surface were measured by pulling a sled the bottom face of which comprising a flat surface area of 40 $cm^2$ (6.3 cm on one side) of such substrate material over the exposed layer on the aluminum test plate. The total weight of the sled including 40 $cm^2$ of the test substrate was 200 g.
The substrate materials used on the bottom face of the sled were varied as follows:

1) Self: Another sheet of the exposed layer of the backing was used as a substrate, thus measuring the coefficient of friction of the respective exposed layer material against itself.

2) Cardboard available as Mosinee # 696C virgin fiberboard from Mosinee Paper Corporation, Wisconsin/USA).

3) Biaxially-oriented polypropylene (BOPP) 36 µm thick, available as WALOTHEN 040E from Wolff Walsrode AG, Walsrode, Germany. The film was not corona-treated or chemically primed.

4) Polyethylene terphthalate (PET): 36 µm thick, available as HOSTAPHAN RN 36 from Puetz & Co., Taunusstein-Wehen, Germany. The film was not corona-treated or chemically primed.

5) Repulpable slip-resistant paper: available as ANTIGLISSE 2150 (brown), 150 $g/m^2$ from CGP Industries, Decines, France (through Roscheck KG, Cologne, Germany).

The static coefficient of friction was calculated from the frictional forces measured according to the following formula:
Static coefficient of friction ($\mu_s$)

$$\mu_s = F_s/F_\rho$$

where $F_s$ is the static frictional force and $F_\rho$ is the normal force (the force acting perpendicular to the surfaces in contact). The normal force employed was 200g in each case.
Measurements were made by mounting the sled into a commercially available tensile tester (available from Zwick GmbH & Co. in Ulm, Germany) and pulling it for a total distance of ca. 7.5 cm at a rate of 100 mm / min across the exposed functional surface to be evaluated. Test data were collected and coefficient of friction results were calculated using the software package testXpert ® Version 04.96 / T-01-00 (Copyright 1996) available from Zwick GmbH & Co in Ulm, Germany.
The test was run five times for each material using five different samples, and the results averaged.

*T-peel of the exposed layer of the backing against itself (3 days at 23 °C and 3 days at 50 °C)*

Two sheets of backing each having an exposed layer and the dimensions of 10 cm wide by 15 cm long, were placed against each other so that the exposed layers were in contact. The two backings, lying on top of one another, were taped together at the ends with a paper-based masking tape, Tape # 202 from 3M Company, St. Paul, Minnesota/USA. The taped assembly was then rolled over with a rubber-coated hand roller, applying firm pressure by hand, to eliminate air bubbles between the two exposed film layers.

The assembly was then placed between two aluminum plates (ca. 12 cm wide and ca. 25 cm long having a thickness of 1 mm) and

a) placed in a forced air oven at 50 °C for three days and, respectively,
b) placed in a controlled environment at 23 °C and 50 % relative humidity for three days.

Weights of 500 g were placed on both ends of the aluminum plates and were allowed to remain at the condition specified for 3 days. The weights and aluminum plates were then removed. The assembly was placed in a controlled environment for 30 minutes at 23 °C and 50 % relative humidity (in cases where it had previously been in an oven) before evaluation.

Three strips having a width of 1.27 cm and a length of about 10 cm were cut from the taped assembly prepared above.

T-peel was measured according to (American Society of Testing and Materials) ASTM D1876-6IT. The two films of the taped assembly were separated for a distance of ca. 2 cm at one end of the assembly and each of the two ends was placed, respectively, in each of the jaws of a tensile tester. The jaws of the tensile tester were then moved apart at a rate of 300 mm/min. The force required to separate the laminate was recorded in N/1.27 cm. Two separate two-sheet assemblies were evaluated for each material and the results averaged.

<u>*90° peel adhesion*</u>

90° peel adhesion of the exposed layer of a sheet of backing layer from the surface of an interlayer was measured using a tensile tester adapted in a special configuration to allow a peel angle of 90° to be maintained during the test. The equipment configuration is described in FINAT Test Method no. 2, a standard 90° peel test method (available from Federation Internationale des Fabricants Europeens et Transformateurs d'Adhesifs et Thermocollants sur Papiers et autres Supports (FINAT)).

There were several exceptions to the described FINAT method which are given below:

1) FINAT 2 requires a glass substrate. Glass was replaced by a stainless steel plate with sheets of varying interlayer attached to the surface using double-coated adhesive tape.
2) A "standard FINAT test roller" was replaced by a 6.8 kg roller.
3) The laminate including the backing and the interlayer was rolled twice at 300 mm/min rather than twice at 200 mm/min as called for by the FINAT 2 method.

The sheet of the backing including its exposed layer to be evaluated was cut into strips having a width of 1.27 cm. A strip of the backing was then rolled down onto the interlayer on the test plate so that the exposed layer faced the test plate surface, using a 6.8 kg roller at a speed of 300 mm/min.

The force required for removal of the backing from the interlayer after a dwell time of 20 min. at 23 °C was then measured using a tensile tester arranged in a configuration so that the peel angle from the substrate bearing the interlayer was maintained at 90° during the test.

Each exposed layer to be tested was evaluated using three different samples of the backing and the results averaged. 90° peel adhesion results were recorded in N/2.54 cm.

The interlayer sheet materials which were attached to the test plate and used as test surfaces were:

a) Polyethylene terephthalate (PET) - 36 µm thick, available as HOSTAPHAN RN 36 from Puetz & Co., Taunusstein-Wehen, Germany. The film was not corona-treated or chemically primed.

b) Biaxially-oriented polypropylene (BOPP) 36 µm thick, available as WALOTHEN 040E from Wolff Walsrode AG, Walsrode, Germany. The film was not corona-treated or chemically primed.

c) Cardboard available as Mosinee # 696C virgin fiberboard from Mosinee Paper Corporation, Wisconsin/USA

d) Repulpable slip-resistant paper available as ANTIGLISSE 2150 (brown), 150 g/$m^2$ from CGP Industries, Decines, France (through Roscheck KG, Cologne, Germany).

*Roughness, $R_z$ DIN*

The mechanical surface roughness of any given interlayer sheet was measured according to the method Deutsche Industrie Norm (DIN) 4768 (Sheet 1) using a Model T-2000 from Hommelwerke GmbH, Schwenningen, Germany. The results are recorded as $R_z$ DIN, the arithmetic mean of five values of the difference between the maximum and minimum value in five neighboring single measurement lengths in the filtered roughness profile, and given in µm.

*Static shear of tape from fiberboard*

Static shear of the pressure-sensitive adhesive tape from fiberboard was measured according to test method (Association Des Fabricants Europeens De Rubans Auto-Adhesifs) AFERA 4012 with the exception that instead of the stainless steel substrate required by the method, a substrate of Mosinee # 696C virgin fiberboard, available from Mosinee Paper Corporation, Wisconsin/USA, was employed. The adhered sample area of the pressure-sensitive adhesive tape had dimensions of 1.27 cm x 2.54 cm, and a weight of 1 kg was employed. Time to bond failure was recorded in minutes.

*180° peel adhesion of tape*

Peel adhesion of the pressure-sensitive adhesive tape was measured according to AFERA 4001 from stainless steel at 0.3 m /min. The samples of the pressure-sensitive adhesive tape were 2.54 cm in width and were rolled down twice in each direction with a 5 kg steel roller. A 10 minutes dwell time was allowed before 180° peel adhesion was measured. Five samples were tested and the results averaged. Results were recorded in N/2.54 cm

*Unwind of adhesive tape*

The unwind force of a roll of pressure-sensitive adhesive tape was measured according to test method (Association Des Fabricants Europeens De Rubans Auto-Adhesifs) AFERA 4013. A speed of 0.3 m/min was employed. The unwind force was recorded in N/cm.

Materials employed in the examples

AFFINITY PL 1880 - a polyolefin plastomer (POP) comprising a copolymer of ethylene and octene, density of 0.902, melt index (190 °C / 2.16 kg) measured by ISO 1133 (g/10 min) = 1.0, melting point 100 °C by DSC, Vicat softening point 87 °C, available as AFFINITY PL 1880 from Dow Plastics, a business unit of Dow Europe S.A.

AFFINITY VP 8770 - a polyolefin plastomer (POP) comprising a copolymer of ethylene and octene, density of 0.885, melt index (190 °C / 2.16 kg) measured by ISO 1133 (g/10 min) = 1.0, melting point 74 °C by DSC, Vicat softening point 57 °C, available as AFFINITY VP 8770 from Dow Plastics, a business unit of Dow Europe S.A.

AFFINITY EG 8150 - a polyolefin plastomer (POP) comprising a saturated ethylene octene copolymer, melt index (190 °C / 2.16 kg) measured by ISO 1133 (g/10 min) = 0.5, Mooney viscosity (ML 1+4/121 °C) according to DIN 53523/T1 of 35, density of 0.868, Vicat softening point of 45 °C, available as AFFINITY EG 8150 from Dow Plastics, a business unit of Dow Europe S.A.

ENGAGE KC 8852 - a polyolefin plastomer (POP) produced using INSITE (TM) Technology from Dow Plastics, comprising a saturated ethylene octene copolymer, Vicat softening point of 48 °C, melt index (190 °C / 2.16 kg) measured by ISO 1133 (g/10 min) = 3.0, density of 0.875, available as ENGAGE KC 8852 from DuPont Dow Elastomers, Bad Homburg, Germany.

AFFINITY PT 1409 - a polyolefin plastomer (POP) comprising a saturated ethylene octene copolymer, melt index (190 °C / 2.16 kg) measured by ISO 1133 (g/ 10 min) = 6, Vicat softening point of 92 °C, density of 0.911, available as AFFINITY PT 1409 from Dow Plastics, a business unit of Dow Europe S.A.

FINA 3374X - film grade polypropylene homopolymer, density 0.905, melt flow (g/10 min) 2.5, melting point 163 °C (available as FINA 3374X from Fina Oil and Chemical Company).

LOTRYL 30BA02 - a random copolymer of ethylene (70 %) and butyl acrylate (30 %), melt index 1.5-2.5 (g/ 10 min), melting point 78 °C, Vicat softening point 45 °C, available from Elf Atochem.

LOTRYL 28MA07 - a random copolymer of ethylene (70-74 %) and methyl acrylate (26-30 %), melt index 6-8 (g/10 min), melting point 65 °C, Vicat softening point < 40 °C, available from Elf Atochem.

EVATANE 28-03 - a random copolymer of ethylene and vinyl acetate, ethylene (73 %) vinyl acetate (27 %), melt index (g/10 min) = 3-4.5, melting point = 75 °C, Vicat softening point = 44 °C, available from Elf Atochem.

TAFMER P 0280 - an ethylene propylene copolymer (polyolefinic elastomer) having a density of 0.87, melt flow rate (230) in g/min of 5.4, Vicat softening point of ca. 40 °C, available from Mitsui Chemicals Europe GmbH, Duesseldorf, Germany.

## Examples

### *Example 1*

A backing comprising one layer of polypropylene (FINA 3374X, polypropylene homopolymer, density 0.905) as a support layer and one layer of linear low density polyethylene (polyolefin plastomer having a density of 0.868, Vicat softening point of 45 °C, available as AFFINITY EG 8150 from Dow Plastics) as an exposed layer was prepared by coextrusion, employing two parallel single screw extruders. The main extruder for the polypropylene support layer was a 1 ♂" diameter single screw extruder (HPM Company) with a L/D of ca 28 held at about 227-249 °C. The auxiliary extruder for the exposed layer was a single screw extruder (Brabender Company) with a 1 □" screw and an L/D of ca. 22 held at 200-250 °C. The two extruders fed a Cloeren ™ multilayer feed die held at a temperature of 243 °C. The total thickness of the two-layer, unstretched backing was 2.4 mm.

The clear, two-layer backing was then sequentially biaxially oriented 5.4 times in the machine direction (MD) at 90 °C and 9.0 times in the cross direction (CD) at temperatures of 170 °C, 170 °C, 170 °C and 145 °C in four subsequent zones using conventional sequential orientation equipment and processes to produce a two-layer backing having a polypropylene (PP) support layer with a thickness of about 36 microns and an VLDPE exposed layer with a thickness of 11 microns. The composition of the two-layer backing is summarized in Table 1.

The polypropylene support layer of the backing thus prepared was corona treated and then coated with a solvent borne solution of a copolymer of isooctyl acrylate (IOA) and acrylic acid (AA) using a roll coater to provide a wet coating weight of about 100 g/m$^2$. The adhesive layer was then dried in a forced air oven at a temperature of about 65 °C for ca. 5 min. The dry coating weight of the pressure-sensitive adhesive layer was about 25 g/m$^2$ or about 25 μm. The resulting pressure-sensitive adhesive tape was wound upon itself into a roll and then slit to smaller widths of 50 mm.

The characteristics of the exposed layer of the backing of the pressure-sensitive adhesive tape thus prepared were evaluated using the test methods described above:

a) Coefficient of friction (COF) measurements against itself and cardboard
b) A T-peel test (exposed layer of backing against itself) after back-to-back contact at 23 °C or 50 °C for 3 days as described under "Test methods".

T-peel and COF values are shown in Table 1.

### *Example 2-3*

Example 1 was repeated with the exception that the two-layer backing comprising an Affinity EG 8150 layer as an exposed layer and polypropylene layer as a support layer, was oriented in a different manner as compared to Example 1. In Example 2, the two layer film was subjected to a simultaneous orientation process using a LISIM ™ HUT tenter stretching apparatus (available from Brueckner Maschinenbau GmbH, Siegsdorf, Germany) to give a backing which was stretched about 5.4 times its original length in the machine direction (MD) and about 9 times its original width in the cross-web direction (CD). The final thickness after stretching of the exposed layer was 4 μm and of the support layer was 46 μm.

Example 3 was prepared in a manner similar to Example 2, with the exception that the final thickness of exposed VLDPE layer was 8 μm and of the support layer was 34 μm.

Properties of these backings are shown in Table 1.

Properties of slit rolls of the pressure-sensitive adhesive tape of Examples 2 and 3 are shown in Table 2. The tape was found to unwind easily and had acceptable 90° peel adhesion values and static shear to cardboard values after being in contact with the exposed layer of the backing.

### *Examples 4-5*

Examples 4 and 5 were prepared by coextrusion and simultaneous biaxial orientation of the backing in a manner similar to that described in Examples 3 and 4. The exposed layers of Affinity EG 8150 had a thickness of 8 μm and 12 μm, respectively, upon stretching. Both samples of the backing were oriented in both the length and width directions to seven-fold their original dimensions.

Properties of slit rolls of the pressure-sensitive adhesive tape of Examples 4 and 5 are shown in Table 2. These tapes rolls were also found to have acceptable unwind properties as well as acceptable 90° peel adhesion values and static shear to cardboard values after being in contact with the exposed layer of the backing.

*Example 6*

Example 6 was prepared by coextrusion and sequential biaxial orientation of the resulting backing in a manner similar to that described in Example 1. The exposed layer of the backing comprised an 8 μm thick layer of Engage KC 8852 upon stretching. Properties of the exposed layer of the backing are shown in Table 1.

*Example 7*

Example 1 was repeated with the exception that the exposed layer of the backing was a mixture of Affinity VP 8770 and Affinity EG 8150 in a weight ratio of 75:25. The Vicat softening points of the two polymers were 57 °C and 45 °C, respectively.

*Examples 8-10*

Examples 8-10 were prepared by extrusion of two single-layer films used as exposed layer and support layer, respectively, and then heat laminating the two individual films together. The resulting backings were then simultaneously biaxially oriented by the method employed in Examples 2-5. The three polymers employed as exposed layers were Lotryl 30BA02, Lotryl 28MA07 and Evatane 2803; polypropylene was used as a support layer in all backings prepared.

*Examples 11-14*

Examples 11-14 were prepared by co-extruding as exposed layers VLDPE (Ex. 11) or layers of ethylene-containing copolymers (Ex. 12-14) along with a 10 μm layer of ethylene-acrylic acid copolymer as a primer or tie layer onto both surfaces of an 85 μm brown kraft paper which acted as a support layer. The non-oriented, exposed layers of these materials comprised, respectively, 53 μm Affinity EG 8150, 47 μm Lotryl 30BA02, 51 μm Lotryl 28MA07 and 49 μm Evatane 2803. The properties of these unoriented backing materials are shown in Table 1.

*Example 14a*

The procedure of Example 1 was used to prepare a backing comprising an exposed layer of Evatane 2803, a random copolymer of ethylene and vinyl acetate, ethylene (73 %) vinyl acetate (27 %), melt index (g/10 min) = 3-4.5, melting point = 75 °C, Vicat softening point = 44 °C, available from Elf Atochem. The thickness of the exposed layer was 20 μm. The support layer comprised a 50:50 wt:wt mixture of polypropylene (available as PPC 8750 from Fina Atochem) and polyethylene (available as ATO LD0304 from Fina Atochem) in a thickness of 50 μm. The backing was non-oriented and the pressure-sensitive adhesive layer was applied as described in Example 1.

*Comparative Example C1*

A two-layer backing was coextruded and sequentially biaxially oriented to produce a 9 μm layer of Affinity PT 1409 as an exposed layer on a 45 μm layer of polypropylene as a support layer. Affinity PT 1409 has a Vicat softening point of 92 °C. Properties of the exposed layer of this film show a low coefficient of friction and low T-peel values, under both sets of conditions employed (3 days at 23 °C and 3 days at 50 °C).

*Comparative Examples C2 and C3*

Comparative Examples C2 and C3 both employ Affinity PL 1880 as an exposed layer. Affinity PL 1880 has a Vicat softening point of 87 °C. Both C2 (an unoriented single layer of Affinity PL 1880) and C3 (a stretched backing comprising a layer Affinity PL 1880 as an exposed layer and a layer of polypropylene as a support layer) show low T-peel values after 3 days at 23 °C and 50 °C, respectively.

*Example 15*

Example 15 was prepared by extruding a layer of Tafmer P0280 as an exposed layer onto primed paper as a support layer. The exposed Tafmer P0280 layer of this unoriented backing material was tested and was found to have the properties summarized in Table 1.

Table 1

| Ex. | Exposed layer | | | Support layer | | Stretching mode | Stretch ratio | T-peel, 3d, 23 °C | T-peel, 3d, 50 °C | COF[1)] | COF[2)] |
|---|---|---|---|---|---|---|---|---|---|---|---|
| | Type | µm | Vicat s. p. | Type | µm | | (MD : CD) | (N/ 1.27 cm) | (N/ 1.27 cm) | 200 g | 200 g |
| 1 | Affinity EG 8150 | 11 | 45 °C | PP[3)] | 36 | Seq. biax. | 5.4 : 9.0 | 0.16 | 2.42 | 1.4 | 6.1 |
| 2 | Affinity EG 8150 | 4 | 45 °C | PP[3)] | 46 | Sim. biax. | 5.4 : 9.0 | 0.38 | 4.06 | 1.2 | 7.5 |
| 3 | Affinity EG 8150 | 8 | 45 °C | PP[3)] | 34 | Sim. biax. | 5.4 : 9.0 | 0.03 | 2.08 | 1.4 | 7.7 |
| 4 | Affinity EG 8150 | 8 | 45 °C | PP[3)] | 38 | Sim. biax. | 7.0 : 7.0 | 0.03 | 2.10 | 1.5 | 3.8 |
| 5 | Affinity EG 8150 | 12 | 45 °C | PP[3)] | 31 | Sim. biax. | 7.0 : 7.0 | 0.06 | 3.56 | 1.9 | 5.1 |
| 6 | Engage KC 8852 | 8 | 48 °C | PP[3)] | 45 | Seq. biax. | 5.4 :9.0 | --- | 2.93 | 1.3 | 4.6 |
| 7 | VP 8770/ EG8150 (75:25) | 8 | 57°C, 45 °C | PP[3)] | 35 | Seq. biax. | 5.4 : 9.0 | --- | 0.15 | 1.9 | 2.3 |
| 8 | Lotryl 30BA02 | 11 | 45 °C | PP[3)] | 45 | Sim. biax. | 6.0 : 6.0 | 0.0 | 1.16 | 1.1 | 3.8 |
| 9 | Lotryl 28MA07 | 12 | < 40 °C | PP[3)] | 43 | Sim. biax. | 6.0 : 6.0 | 0.50 | 3.17 | 1.4 | 7.3 |
| 10 | Evatane 2803 | 12 | 44 °C | PP[3)] | 43 | Sim. biax. | 6.0 : 6.0 | 0.05 | 1.25 | 0.9 | 5.9 |
| 11 | Affinity EG 8150 | 53 | 45 °C | Paper[4)] | 85 | None | --- | < 0.01 | 0.03 | 0.9 | 6.7 |
| 12 | Lotryl 30BA02 | 47 | 45 °C | Paper[4)] | 85 | None | -- | 0.07 | 1.88 | 1.2 | 6.6 |
| 13 | Lotryl 28MA07 | 51 | < 40 °C | Paper[4)] | 85 | None | - | 0.13 | 3.63 | 1.9 | 7.3 |
| 14 | Evatane 2803 | 49 | 44 °C | Paper[4)] | 85 | None | -- | < 0.01 | 0.04 | 0.6 | 6.0 |
| 14a | Evatane 2803 | 20 | 44 °C | pp[5)] | 50 | None | -- | 0.02 | 2.45 | 0.8 | 4.2 |
| 15 | Tafmer P0280 | 78 | ca. 40 °C | Paper[4)] | 86 | None | --- | < 0.01 | 0.02 | 0.78 | 5.8 |
| C1 | Affinity PT 1409 | 9 | 92 °C | PP[3)] | 45 | Seq. biax. | 5.4 : 9.0 | < 0.01 | < 0.01 | 0.7 | 1.8 |
| C2 | Affinity PL 1880 | 42 | 87 °C | None | --- | None | --- | < 0.01 | 0.04 | 0.8 | 7.6 |

Table 1 (continued)

| Ex. | Exposed layer | | | Support layer | | Stretching mode | Stretch ratio | T-peel, 3d, 23 °C | T-peel, 3d, 50 °C | COF1) | COF2) |
|---|---|---|---|---|---|---|---|---|---|---|---|
| | Type | µm | Vicat s. p. | Type | µm | | (MD : CD) | (N/ 1.27 cm) | (N/ 1.27 cm) | 200 g | 200 g |
| C3 | Affinity PL 1880 | 9 | 87 °C | PP3) | 36 | Seq. biax. | 5.4 : 9.0 | < 0.01 | 0.03 | 0.9 | 1.2 |

1) against cardboard
2) against itself
3) PP = Fina 3374X polypropylene
4) Paper = 85 µm thick brown kraft paper
5) PP = PPC 8750 from Fina Atochem

Table 2

| Ex. | Unwind force (N / cm) | Static shear from cardboard (min) | 180° peel adhesion (SS) (N / 2.54 cm) |
|---|---|---|---|
| 2 | 1.02 | 51 | 5.88 |
| 3 | 0.93 | 76 | 3.41 |
| 4 | 1.03 | 85 | 4.67 |
| 5 | 0.99 | 52 | 5.73 |

*Examples 16-19*

In Example 16, the backing of Example 11 comprising an exposed layer of unoriented Affinity EG 8150 on paper as a support layer was employed in conjunction with each of four interlayers. The roughness $R_z$ of each of the four interlayers is given in Table 3. 90° peel adhesion of the interlayer from the exposed layer and coefficient of friction of the interlayer against the exposed layer were measured and summarized in Table 3. The peel adhesion of the unoriented exposed layer from each interlayer is zero or less than 0.01 N/2.54 cm

*Examples 20-27*

The exposed layers of the backing of the pressure-sensitive adhesive tapes of Examples 1 and 5, respectively, were evaluated in combination with four different interlayer materials. The roughness of the surface of each of the interlayers evaluated and the 90° peel adhesion of the exposed layer of the backing from the surface of the interlayers were measured. The coefficient of friction of the exposed layer of the backing of the pressure-sensitive adhesive tape backing against the surface of the interlayer sheets was also measured.

*Examples 28-31*

The pressure-sensitive adhesive tape of Example 13 (unoriented ethylene-co-methyl acrylate as exposed layer) was used in conjunction with each of four interlayer sheets. Test results are summarized in Table 3.

*Examples 32-35*

The adhesive tape of Example 9 (oriented ethylene-co-methyl acrylate) was employed in conjunction with four interlayer sheets. Test results are summarized in Table 3.

Table 3

| Ex | Backing | Interlayer (sled) | Roughness*), $R_{z\ DIN,\ \mu m}$ | 90° peel adhesion**) (N/2.54 cm) | COF***), (200 g) |
|---|---|---|---|---|---|
| 16 | Ex. 11 | BOPP | 1.0 | < 0.01 | 6.2 |
| 17 | Ex.11 | Polyester | 1.5 | 0 | 5.4 |
| 18 | Ex.11 | Cardboard | 23 | 0 | 0.9 |
| 19 | Ex. 11 | Slip-resistant paper | 38 | 0 | 2.2 |
| 20 | Ex.1 | BOPP | 1.0 | 0.05 | 4.3 |
| 21 | Ex.1 | Polyester | 1.5 | 0.02 | 4.0 |
| 22 | Ex.1 | Cardboard | 23 | 0 | 1.4 |
| 23 | Ex. 1 | Slip-resistant paper | 38 | 0 | 2.2 |
| 24 | Ex. 5 | BOPP | 1.0 | 0.15 | 4.2 |
| 25 | Ex. 5 | Polyester | 1.5 | 0.24 | 7.6 |
| 26 | Ex. 5 | Cardboard | 23 | 0 | 1.9 |
| 27 | Ex. 5 | Slip-resistant paper | 38 | 0 | 5.1 |
| 28 | Ex. 13 | BOPP | 1.0 | 0.43 | 7.0 |
| 29 | Ex. 13 | Polyester | 1.5 | 0.45 | 4.6 |
| 30 | Ex. 13 | Cardboard | 23 | 0 | 1.9 |
| 31 | Ex. 13 | Slip-resistant paper | 38 | 0 | 4.0 |
| 32 | Ex. 9 | BOPP | 1.0 | 0.73 | 8.1 |
| 33 | Ex. 9 | Polyester | 1.5 | 0.46 | 6.3 |
| 34 | Ex. 9 | Cardboard | 23 | 0 | 1.4 |
| 35 | Ex. 9 | Slip-resistant paper | 38 | 0 | 2.6 |

*) of interlayer
**) exposed layer of backing from interlayer
**) exposed layer of backing against interlayer

*Examples 36-39 and Comparative Examples C47- C7*

Practical experiments were performed to show advantageous properties of the stacks of the invention employing pressure-sensitive adhesive tapes useful in the present invention over conventional stacks of goods employing the prior art packaging tape with a release-coated exposed surface of the backing.

*Part A : Preparation of loaded pallets for horizontal dislocation test*

Corrugated cardboard cartons having the dimensions of 400 mm X 300 mm X 260 mm, commercially available as FKT 1514 Quality 1.3 from Stone Europa Carton in Duesseldorf, Germany, were used.

Fifty (50) mm wide rolls of a pressure-sensitive adhesive tape specified below were employed and applied to the corrugated cardboard cartons by hand. A length of tape was used to close the bottom of the carton. A bag containing 8 kg of polypropylene pellets was placed inside of each carton and then the top flaps were closed with an additional length of adhesive tape. Thus the top and bottom surface of each carton had a single strip of tape running along the length of the box and centered across the closure flaps in the conventional method of employing box-sealing tape.

Thirty-two (32) cartons closed with a pressure-sensitive adhesive tape as described above were placed on a wooden "Euro-pallet" having the dimensions of 80 cm wide by 120 cm long. The cartons were stacked in eight columns of four cartons with the sides touching. Each of the four horizontal layers consisted of a two by four matrix of cartons.

Four pallets were prepared: two having cartons closed with 3M Packaging Tape 371 and two having cartons closed with the tape of Example 1. One pair of pallets (a control pallet where cartons were sealed with # 371 packaging tape and an experimental pallet with boxes bearing the tape of Example1) was fully wrapped with 200 g stretchable pallet-wrapping film commercially available as VLDPE Stretch Film (thickness 20 µm, both sides self-adherent) from Pfeil Verpackung, Duesseldorf, Germany. 3M Packaging Tape 371 comprises a biaxially oriented polypropylene release coated backing bearing a rubber/resin pressure-sensitive adhesive layer.

A second pair of pallets was wrapped around the bottom layer of four cartons with the same stretchable pallet-wrapping film. Two bands of pressure-sensitive adhesivecoated strapping tape (available as Scotch ™ Tape 3741 Utility Strapping Tape from 3M Deutschland GmbH, Neuss, Germany) were placed around the top layer of four boxes: one band at the bottom of the layer and one band near the top. Thus the lowermost layer and the uppermost layer of boxes were secured together, but the two middle layers were unsecured and all four layers were free to move against each other during the following test.

*Part B: Horizontal dislocation test*

This test simulated forces encountered by stacked pallets during long-distance transportation with trucks as well as short intra-company transportation with fork lifts and motorized hand carts.

A loaded pallet prepared according to Part A above was placed on a rolling platform. The platform was fitted with wheels that were allowed to run on two rails inclined at an angle of approximately 25 degrees from horizontal in a parallel fashion. At the lower end of the rails, the rolling pathway ended in a firmly anchored wooden beam placed perpendicular to the direction of movement of the loaded pallet. The wooden beam encountered the pallet below the load. The loaded pallet was released from differing distances along the inclined railway. The distances were pre-calibrated to generate approximately known forces when the pallet was suddenly stopped at the end of the inclined railway by the wooden beam.

The loaded pallet was allowed to run along the railway, released from increasing distances along the inclined railway. The force with which the pallet encountered the wooden beam was measured electronically in each case. Observations were made as to whether the pallet load shifted due to the sudden deceleration and if so, the movement of the layers was measured. One measurement was made for the displacement of the top layer of cartons and a second measurement was made near the center of the load.

Decelerations in the range of ca.1 g to ca. 3 g, where g is one Earth gravitational unit or 9.81 $m/s^2$, were employed.

Table 4 shows results of pallets completely wrapped with stretch film as described above under Part A and Table 5 shows the results of pallets only partially wrapped with stretch film as described above under Part A.

Table 4:

| *Tests with pallets completely wrapped with stretch film* | | | | |
|---|---|---|---|---|
| Example | Tape type | g value | Dislocation of top layer of boxes, cm | Dislocation near center, cm |
| C4 | #371 | 0.9 | 3 | 3 |
| 36 | Affinity EG 8150 | 1.0 | 2 | 2 |
| C5 | # 371 | 2.0 | 6 | 6 |
| 37 | Affinity EG 8150 | 2.1 | 2.5 | 2.5 |

Table 5:

| *Tests with pallets completely wrapped with stretch film* | | | | |
|---|---|---|---|---|
| Example | Tape type | g value | Dislocation of top layer of boxes, cm | Dislocation near center, cm |
| C6 | 371 | 0.8 | 4 | 2 |
| 38 | Affinity EG 8150 | 0.8 | 0 | 0 |
| C7 | 371 | 1.4 | 4 | 2 |
| 39 | Affinity EG 8150 | 2.0 | 2 | 2 |

**Claims**

**1.** Use of a pressure-sensitive adhesive tape comprising a backing bearing a pressure-sensitive adhesive layer, said backing comprising two or more layers, the exposed layer of the backing being a polymer layer wherein the polymer has a Vicat softening point of less than 65 °C, for increasing the stability of a stack of goods comprising two or more superimposed layers of goods.

**2.** Use according to claim 1 wherein the polymer of the exposed layer comprises one or more polymers selected from a group consisting of linear low density polyethylenes (VLDPEs) and copolymers comprising an olefin as a first comonomer and an alkyl(meth)acrylate or vinyl acetate as a second comonomer.

**3.** Use according to any of claims 1-2 wherein the exposed layer of the backing has a thickness of between 1-40 µm.

**4.** Use according to any of claims 1-3 wherein the backing comprises at least one non-exposed support layer comprising a polymer selected from the group consisting of polyolefins, polyesters, polystyrenes, polycarbonates, polyvinylchlorides, polyamides and blends of two or more of such polymers.

**5.** Use according to any of claims 1-4 wherein the non-exposed support layer or layers of the backing have independently from each other a thickness of between 10-300 µm.

**6.** Use according to any of claims 1-5 wherein the exposed layer of the backing or the backing, respectively, is stretched.

**7.** Use according to any of claims 1-6 wherein the backing is simultaneously biaxially stretched.

**8.** Use according to claims 6 and 7 wherein the stretch ratio in the two directions of biaxial stretching is independently from each other at least 3:1.

**9.** Use according to any of claims 1-8 wherein the exposed layer of the backing exhibits a T-peel strength against itself of at least 1 N/2.54 cm after 3 days at 50 °C under a weight of 1 kg.

**10.** Use according to any of claims 1-9 comprising wherein the pressure-sensitive adhesive layer comprises an acrylic based pressure-sensitive adhesive.

**11.** Use according to claims 1-10 additionally using an interlayer having a first and second exposed major surface wherein at least part of at least one of such major surfaces is in contact with at least part of the surface of one piece of goods in a layer of the stack.

**12.** Use according to claim 11 wherein at least one exposed surface of the interlayer has a smooth surface with an average surface roughness $R_z$ of not more than 2 µm.

**13.** Pressure-sensitive adhesive tape comprising a backing bearing a pressure-sensitive adhesive layer, said backing comprising two or more layers, the exposed layer of the backing being a polymer layer wherein the polymer has a Vicat softening point of less than 65 °C and comprises one or more polymers which are selected from a group consisting of linear low density polyethylenes (VLDPEs), and the exposed layer of the backing or the backing, respectively, being stretched.

**14.** Pressure-sensitive adhesive tape according to claim 13 wherein the exposed layer of the backing has a thickness of between 1-40 µm.

**15.** Pressure-sensitive adhesive tape according to any of claims 13 - 14 wherein the backing comprises at least one non-exposed support layer comprising a polymer selected from the group consisting of polyolefins, polyesters, polystyrenes, polycarbonates, polyvinylchlorides, polyamides and blends of two or more of such polymers.

**16.** Pressure-sensitive adhesive tape according to any of claims 13-15 wherein the non-exposed support layer or layers of the backing have independently from each other a thickness of between 10-300 µm.

**17.** Pressure-sensitive adhesive tape according to any of claims 13-16 wherein the exposed layer of the backing or the backing, respectively, is biaxially stretched.

**18.** Pressure-sensitive adhesive tape according to any of claims 13-17 wherein the exposed layer of the backing or the backing, respectively, is simultaneously biaxially stretched.

**19.** Pressure-sensitive adhesive tape according to claims 17 and 18 wherein the stretch ratio in the two directions of biaxial stretching is independently from each other at least 3:1.

**20.** Pressure-sensitive adhesive tape according to any of claims 13-19 wherein the exposed layer of the backing exhibits a T-peel strength against itself of at least 1 N/2.54 cm after 3 days at 50 °C under a weight of 1 kg.

**21.** Pressure-sensitive adhesive tape according to any of claims 13-20 wherein the pressure-sensitive adhesive layer comprises an acrylic based pressure-sensitive adhesive.

**22.** Method of preparing a pressure-sensitive adhesive tape according to any of claims 13-21 comprising the steps of (i) co-extruding the layers of the backing (ii) with subsequent stretching, and (iii) adhering a pressure-sensitive adhesive layer opposite to the exposed layer of the backing.

**23.** Method according to claim 22 wherein chemical primer and/or corona treatment is applied to the surface of the backing which is opposite to the exposed layer of the backing, prior to adhering of the pressure-sensitive adhesive layer.

**24.** Stack of goods comprising two or more superimposed layers of goods, a pressure-sensitive adhesive tape being attached to at least one piece of goods in a layer of the stack, said pressure-sensitive adhesive tape comprising a backing bearing a pressure-sensitive adhesive layer, said backing comprising two or more layers and the exposed layer of the backing being a polymer layer wherein the polymer has a Vicat softening point of less than 65 °C.

**25.** Stack of goods according to claim 24 wherein the pressure-sensitive adhesive tape is attached to at least one piece of goods in the lower layer of a pair of adjacent, superimposed layers of the stack and to at least one piece of goods in the upper layer of said pair of layers of the stack, so that at least part of the surface of the exposed layer of the backing of the pressure-sensitive adhesive tape of said piece of goods in said lower layer of the pair of layers of the stack and at least part of the surface of the exposed layer of the backing of the pressure-sensitive adhesive tape of said piece of goods in said upper layer of the pair of layers of the stack, are in contact with each other.

**26.** Stack of goods according to any of claims 24 or 25 additionally comprising an interlayer sheet having a first and second exposed major surface wherein at least part of the surface of at least one of such major surfaces is in contact with at least part of the surface of one piece of goods in a layer of the stack.

**27.** Stack of goods according to claim 26 wherein at least one of the exposed surfaces of said interlayer has a smooth surface with an average surface roughness $R_z$ of not more than 2 µm.

**28.** Stack of goods according to any of claims 24-27 wherein the exposed layer of the backing or the backing, respectively, is stretched.

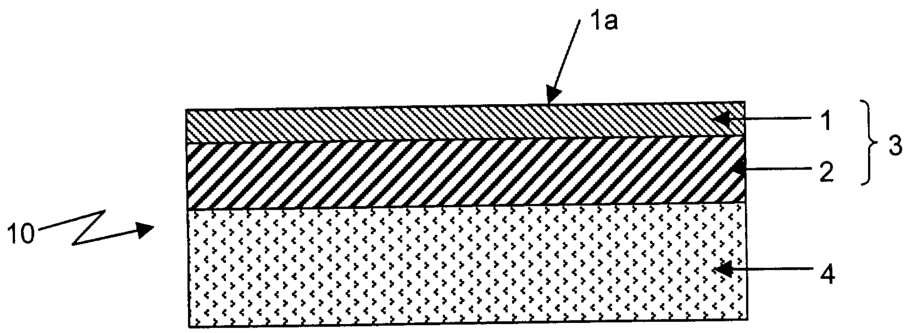


Fig. 1

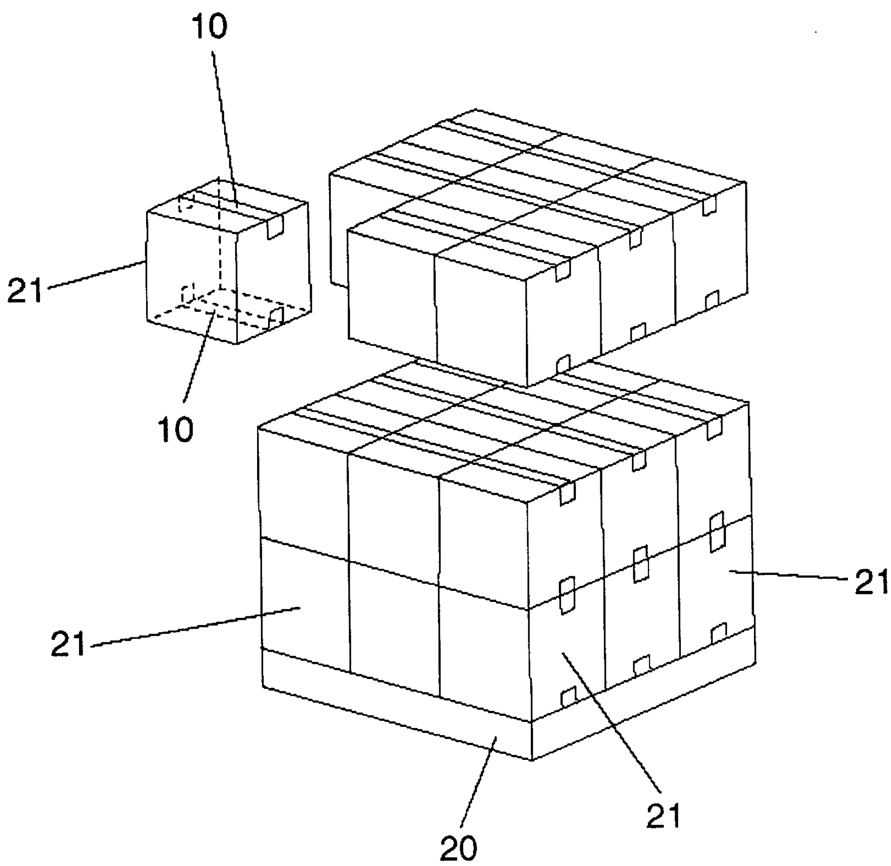


Fig. 2

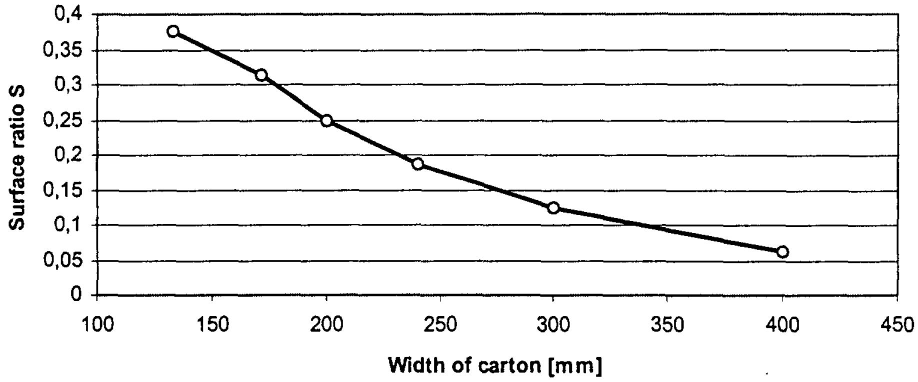
0,4
0,35
0,3
0,25
0,2
0,15
0,1
0,05
0
Surface ratio S
100
150
200
250
300
350
400
450
Width of carton [mm]

Fig. 3

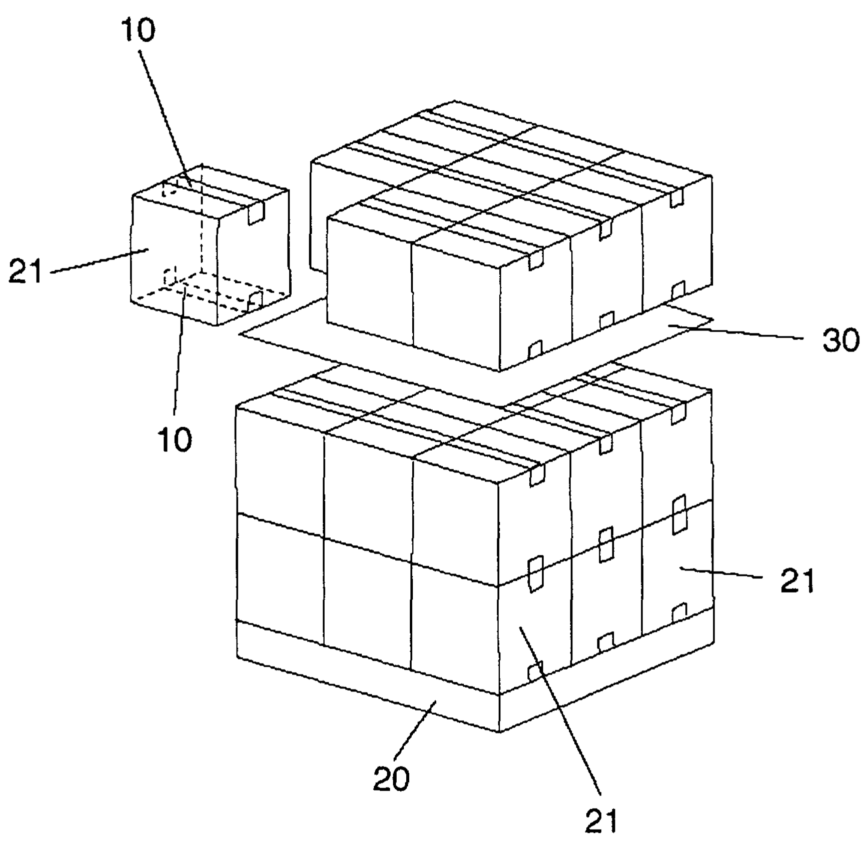
10
21
10
30
21
20
21

Fig. 4

European Patent Office

# EUROPEAN SEARCH REPORT

Application Number
EP 00 11 8960

| Category | Citation of document with indication, where appropriate, of relevant passages | Relevant to claim | CLASSIFICATION OF THE APPLICATION (Int.Cl.7) |
|---|---|---|---|
| A | DE 295 04 234 U (VIALI CHEM PROD GMBH ;RITTER CHEMIE KARL HERMANN RIT (DE)) 11 May 1995 (1995-05-11) * claims 1-3; figure 1 * | 1-28 | C09J7/02<br>B65D5/00<br>B65D5/02<br>B32B27/32 |
| A | EP 0 003 094 A (SCA DEVELOPMENT AB) 25 July 1979 (1979-07-25) * page 2, line 35 - line 11 * | 1-28 | |
| A | DE 44 02 444 A (MINNESOTA MINING & MFG) 3 August 1995 (1995-08-03) * claims 1,3,14 * | 1-28 | |
| A | EP 0 724 002 A (MOBIL PLASTICS EUROP INC) 31 July 1996 (1996-07-31) * claims 1,5,6,9-11,15,16,18 * | 13 | |
| A | EP 0 960 727 A (SUMITOMO CHEMICAL CO) 1 December 1999 (1999-12-01) * claims 9-11,14 * | 13,22 | |

TECHNICAL FIELDS SEARCHED (Int.Cl.7)

C09J
B65D
B32B

The present search report has been drawn up for all claims

| Place of search | Date of completion of the search | Examiner |
|---|---|---|
| THE HAGUE | 2 February 2001 | Schlicke, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 00 11 8960

This annex lists the patent family membersrelating to the patent documents cited in the above-mentioned European search report.
The members are as contained in the European Patent Office EDP file on
The European Patent Office is in no way liable for these particulars which are merely given for the purpose of information.

02-02-2001

| Patent document cited in search report | Publication date | Patent family member(s) | Publication date |
|---|---|---|---|
| DE 29504234 U | 11-05-1995 | NONE | |
| EP 0003094 A | 25-07-1979 | DE 2861829 D<br>DK 584178 A<br>SE 7714848 A | 01-07-1982<br>30-06-1979<br>30-06-1979 |
| DE 4402444 A | 03-08-1995 | WO 9520633 A | 03-08-1995 |
| EP 0724002 A | 31-07-1996 | NONE | |
| EP 0960727 A | 01-12-1999 | JP 11342570 A<br>JP 11349907 A | 14-12-1999<br>21-12-1999 |

EPO FORM P0459

For more details about this annex : see Official Journal of the European Patent Office, No. 12/82